Europäisches Patentamt

European Patent Office

Office européen des brevets

(19)

(11) Veröffentlichungsnummer: **0 150 668**
**B1**

(12) **EUROPÄISCHE PATENTSCHRIFT**

(45) Veröffentlichungstag der Patentschrift:
16.03.88

(21) Anmeldenummer: 84810593.8

(22) Anmeldetag: 05.12.84

(51) Int. Cl.⁴: **F 16 B 13/00**

(54) Spreizdübel.

(30) Priorität: 09.01.84 DE 3400474

(43) Veröffentlichungstag der Anmeldung:
07.08.85 Patentblatt 85/32

(45) Bekanntmachung des Hinweises auf die Patenterteilung:
16.03.88 Patentblatt 88/11

(84) Benannte Vertragsstaaten:
CH DE FR GB LI

(56) Entgegenhaltungen:
WO-A-81/00602
CH-A-573 060
DE-A-2 213 711
DE-A-2 637 043
DE-A-2 714 503
DE-U-1 631 296
DE-U-7 639 787
DE-U-8 322 151

(73) Patentinhaber: HILTI Aktiengesellschaft, FL- 9494 Schaan (LI)

(72) Erfinder: Richter, Hanno, Ing.- grad.,
Lannerstrasse 5, D-8025 Unterhaching (DE)
Erfinder: Mirsberger, Helmut, Friedrich- List-
Strasse 118, D-8000 München 70 (DE)
Erfinder: Uhlig, Raimer, Bauweberstrasse 1, D-8000
München 71 (DE)
Erfinder: Haage, Manfred, Würmstrasse 6, D-7033
Herrenberg (DE)
Erfinder: Uebel, Philipp, Seestrasse 92, D-8021
Prien/Chiemsee (DE)

(74) Vertreter: Wildi, Roland, Hilti Aktiengesellschaft
Patentabteilung, FL- 9490 Schaan (LI)

EP 0 150 668 B1

## Beschreibung

Die Erfindung betrifft einen Spreizdübel mit Spreizelement zur Abstandsbefestigung von Fassadenplatten und dergleichen an Bauwerken, wobei der Spreizdübel eine Zentralbohrung, einen in eine bauwerkseitige Aufnahmeöffnung einführbaren, vom Spreizelement aufweitbaren Spreizbereich und ein entgegen der Einführrichtung an den Spreizbereich anschliessendes Halsteil aufweist und das Halsteil zur Festlegung der Platten spreizbereichseitig mit einem einrückbaren Auflager und am freien Ende mit einem Widerlager versehen ist.

Aus der DE-A-27 14 503 ist ein Spreizdübel für die Befestigung von Fassadenplatten im Abstand von Bauwerken bekannt. Dieser bekannte Spreizdübel weist an seinem Halsteil ein Auflager und ein Widerlager auf. Zwischen dem Auflager und dem Widerlager wird die im Abstand zu befestigende Fassadenplatte festgelegt, und zwar in der Weise, dass durch eine vorbereitete Bohrung in der Fassadenplatte der Spreizdübel hindurchgeführt wird. Bei diesem Hindurchführen durch die vorbereitete Bohrung der Fassadenplatte weichen die Auflager radial einwärts und federn nach endgültiger Positionierung der Fassadenplatte wieder aus.

Bei diesem bekannten Spreizdübel sind demnach Auflager und Widerlager in einem fest vorbestimmten Abstand angeordnet. Dies hat den Nachteil, dass nur Fassadenplatten von einer bestimmten Dicke befestigt werden können. Weicht diese Dicke von dem vorbestimmten Abstand zwischen Auflager und Widerlager ab, ist eine gesonderte Bearbeitung der Anschlusstelle der Fassadenplatte erforderlich.

Ein Spreizdübel, welcher ein Widerlager aufweist, das nicht in einem fest vorbestimmten Abstand zum Spreizbereich angeordnet ist, zeigt die WO-A-81/00 602. Da dieser weiterhin bekannte Dübel kein Auflager im vorgenannten Sinne aufweist, ist er für die Abstandsbefestigung von Fassadenplatten an Bauwerken nicht brauchbar. Nachteilig wirkt sich bei diesem Dübel ferner der offene wendelartige Bereich aus, da gerade bei der Befestigung von Fassadenplatten darauf geachtet werden muss, dass das Spreizelement zur Verhinderung von Korrosionserscheinungen vollumfänglich geschützt ist.

Der Erfindung liegt die Aufgabe zugrunde, einen Spreizdübel zur Abstandsbefestigung von Fassadenplatten und dgl zu schaffen, der bei Eignung für Durchsteckmontage für die Befestigung unterschiedlich dicker, keiner gesonderten Bearbeitung zu unterwerfenden Fassadenplatten, unter Abstützung durch ein Auflager und ein Widerlager geeignet ist.

Erfindungsgemäss wird die Aufgabe dadurch gelöst, dass der zwischen dem Auflager und dem Widerlager liegende Abschnitt des Halsteiles wenigstens entlang einem Teil seiner Länge einen axial verkürzbaren Bereich aufweist, dass wenigstens im axial verkürzbaren Bereich die Wandstärke gegenüber derjenigen des verbleibenden Halsteil- Bereiches geringer ist, und dass die Zentralbohrung zum freien Ende des Halsteiles hin, anschliessend an den axial verkürzbaren Bereich einen Anschlag für eine Schulter des Spreizelementes aufweist.

Der eine Durchtrittsöffnung in den Platten durchragende verkürzbare Abschnitt zwischen Auflager und Widerlager des Halsteiles erlaubt eine Anpassung an unterschiedliche Plattendicken. Die Plattendicke kann dabei von dem durch den Abstand zwischen Auflager und Widerlager in Ausgangsstellung des Dübel gegebenen Abstand bis hin zu einem nur noch einem Teil dieses Abstandes entsprechenden Mass variieren. Der erfindungsgemässe Dübel eignet sich somit für ein breites Einsatzfeld.

Zweckmässig ist es, das Halsteil dicht auszubilden, um den Zutritt von Korrosion hervorrufender Flüssigkeit und dergleichen zur Befestigungsstelle von der Aussenseite der Platten her zu unterbinden.

Axiale Verkürzbarkeit des zwischen Auflager und Widerlager liegenden Abschnittes des Halsteiles wird konstruktiv einfach mit Vorteil dadurch erreicht, dass der Abschnitt wenigstens teilweise gegenüber der Wandstärke des verbleibenden Halsteil-Bereiches eine geringere Wandstärke aufweist. Beim Vortreiben des beispielsweise als Holzschraube ausgebildeten Spreizelementes in den Dübel läuft der Schraubenkopf am Widerlager auf und verschiebt dieses unter axialer Stauchung des geringere Wandstärke aufweisenden Bereiches des Abschnittes gegen die Platten. Durch Stauchung weitet sich dieser Bereich des Abschnittes nach aussen und legt sich verspreizend gegen die Wandung der Durchtrittsöffnung in den Platten.

Um ein gezieltes Einleiten der Stauchung zu erreichen, kann beispielsweise die Wandstärke des axial verkürzbaren Bereiches des Abschnittes zur Mitte dessen Längserstreckung hin sich verjüngen oder es ist durch eine Ausbachung im Abschitt eine erste Knickstelle vorprogrammiert.

Die Zentralbohrung weist für das Spreizelement zum freien Ende des Halsteiles hin, anschliessend an den verformbaren Bereich des Abschnittes, einen Anschlag für eine Schulter des Spreizelementes auf. Diese Ausführungsform bietet insbesondere Vorteile, wenn der Abschnitt im benachbarten Bereich des Auflagers durch geringere Wandstärke axial verkürzbar ausgebildet ist. Die am Schaft des Spreizelementes angeordnete Schulter steht am Anschlag an und bewirkt in einer ersten Phase des Befestigungsvorganges durch Vortreiben des Spreizelementes die axiale Verkürzung des Abschnittes und damit ein axiales Festlegen der Platten gegenüber dem Halsteil des Dübels. In einer zweiten Phase kann der Abstand der Platten zum Bauwerk durch freies Verschieben des Spreizbereichs in der Aufnahmeöffnung beliebig eingestellt und anschliessend durch vollständiges Eintreiben des Spreizelementes fixiert werden.

Nach einem weiteren Vorschlag der Erfindung ist der zwischen Auflager und Widerlager liegende Abschnitt des Halsteiles im benachbarten Bereich des Auflagers axial verkürzbar ausgebildet. Der dem Widerlager benachbarte Bereich des Abschnittes greift mit radialer Führungsfunktion in die Durchtrittsöffnung der Platten ein.

Die Erfindung wird nachstehend anhand von Zeichnungen, die Ausführungsbeispiele des erfindungsgemässen Spreizdübels wiedergeben, näher erläutert. Es zeigen:

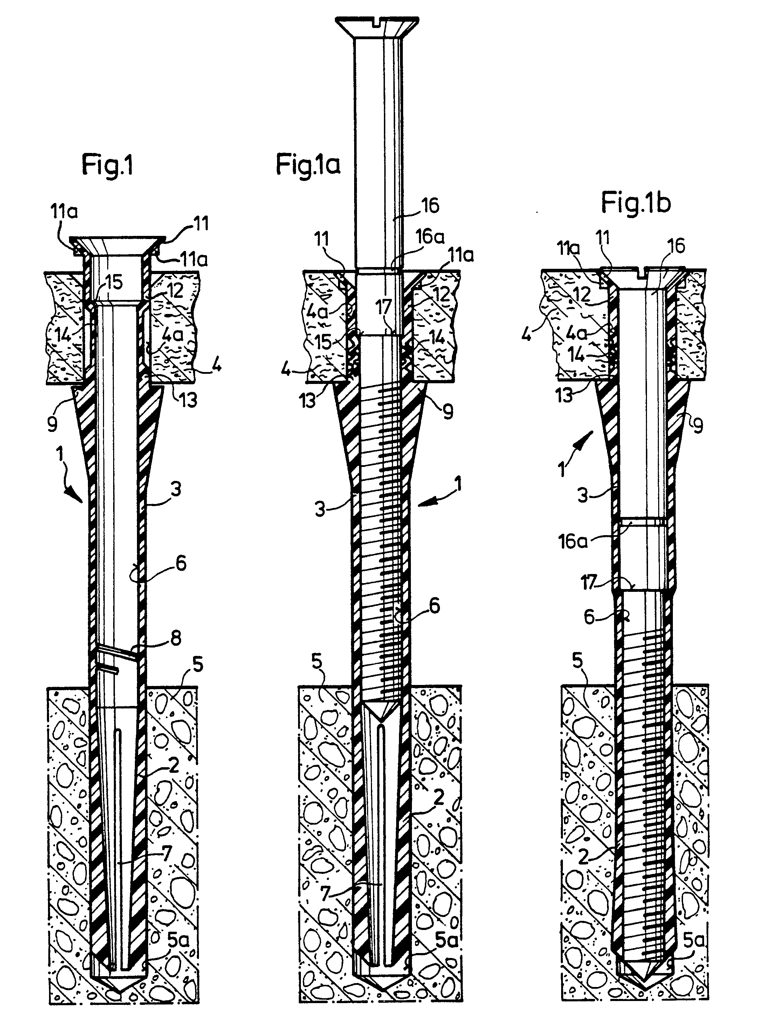

Fig. 1 einen zur Abstandsbefestigung eingeführten, nicht verankerten Spreizdübel im Längsschnitt;

Fig. 1a den Spreizdübel nach Figur 1, mit festgelegter Fassadenplatte, im Längsschnitt;

Fig. 1b den Spreizdübel nach den Figuren 1 und 1a in verankertem Zustand, im Längsschnitt;

Der in Figur 1 dargestellte, insgesamt mit 1 bezeichnete Spreizdübel besteht im wesentlichen aus einem setzrichtungsseitigen Spreizbereich 2 und aus einem an diese anschliessenden Halsteil 3. Der Dübel 1 dient dem Festlegen einer Fassadenplatte 4 im Abstand zu einem Bauwerk 5. Zu diesem Zwecke wird der Dübel 1 durch eine Durchtrittsöffnung 4a hindurch mit dem Spreizbereich 2 in eine Aufnahmeöffnung 5a des Bauwerks 5 eingeführt.

Der gesamte Dübel 1 ist von einer Zentralbohrung 6 durchsetzt, die sich im Spreizbereich 2 in Setzrichtung verengt. Der Spreizbereich 2 ist über die Länge der sich verengenden Zone der Zentralbohrung 6 vom einführrichtungsseitigen Ende her mit einem Axialschlitz 7 versehen. Die Zentralbohrung 6 weist in deren Übergangszone zum Spreizbereich 2 einen Gewindegang 8 auf. Das Halsteil 3 ist mit einem radial einrückbaren, stegartigen Auflager 9 für die Platte 4 versehen. Das Auflager 9 weist in der Projektion eine kreisbogenförmige Mantelkontur auf, deren Radius gleich oder kleiner als der Radius der Durchtrittsöffnung 4a in der Platte 4 ist. Am freien Ende des Halsteils 3 ist ein kopfartiges Widerlager 11 mit unterseitigen Vorsprüngen 11a vorgesehen. Zwischen dem Auflager 9 und dem Widerlager 11 erstreckt sich ein hülsenförmiger geschlossener Abschnitt 12.

Dieser weist einen an das Auflager 9 anschliessenden Zentrieransatz 13 auf, dem ein axial stauchbarer eingeschnürter Bereich 14 folgt. Der Zentrieransatz 13 ist zur Erzielung einer Verdrehsperre in der Durchtrittsöffnung 4a mantelseitig zweckmässig mit Kanten oder dgl. versehen. Auf der Höhe des widerlagerseitigen Auslaufes des Bereiches 14 ist ein Durchmessersprung der Zentralbohrung 6 vorgesehen, der einen schulterförmigen Anschlag 15 bildet. Auch in dieser Zone des Abschnittes 12 können mantelseitig beispielsweise Vorsprünge als Verdrehsperren vorgesehen sein.

Zur Festlegung der Platte 4 gegenüber dem Halsteil 3 wird ein als Schraube ausgebildetes Spreizelement 16 bis zum Auflaufen am Gewindegang 8 in die Zentralbohrung 6 eingestossen. Durch anschliessendes Drehen des Spreizelementes 16 schraubt sich dieses über den Gewindegang 8 tiefer in den Dübel 1 ein. Dabei läuft eine Schulter 17 des Spreizelementes 16 am Anschlag 15 auf, und in der Folge verschiebt sich die widerlagerseitige Zone des Abschnittes 12 zum Auflager 9 hin, bis das Widerlager 11 sich in einer Ansenkung der Durchtrittsöffnung 4a abstützt, wobei sich die Vorsprünge 11a in der Platte 4 gegen Verdrehen verkrallen. Wie der Figur 1a zu entnehmen ist, wird der Bereich 14 dabei gestaucht und legt sich unter Ausknickung gegen die Wandung der Durchtrittsöffnung 4a an. Die nun erlangte Einschraubposition des Spreizelementes gewährleistet einen unverschieblichen gegenseitigen Halt von Dübel 1 und Platte 4 und wird durch bündige Lage einer Markierung 16a mit der Platte signalisiert.

Der Dübel 1 sitzt vorerst in der Aufnahmeöffnung 5a des Bauwerks 5 noch nicht fest und kann folglich zusammen mit der Platte 4 in richtige Abstandsposition gebracht werden. Anschliessend wird das Spreizelement 16 vollends in den Dübel 1 eingeschraubt, wobei der Spreizbereich 2 durch Einlaufen des zylindrischen Gewindeabschnittes des Spreizelementes 16 in die sich verengende Zone der Zentralbohrung 6 in die Aufnahmeöffnung 5a verspreizt wird, wie dies der Figur 1b zu entnehmen ist. Die an die Schulter 17 anschliessende verdickte Zone des Spreizelementes 16 hat dabei ein verstärktes Anpressen der ausgeknickten Falten des Bereiches 14 sowie ein Anpressen des Zentrieransatzes 13 zur Wandung der Durchtrittsöffnung 4a hin bewirkt, so dass zusätzlich zur formschlüssigen Halterung der Platte 4 durch das Auflager 9 und das Widerlager 11 auch ein Halt durch Verspreizung gegeben ist.

**Patentansprüche**

1. Spreizdübel (1) mit Spreizelement (16) zur Abstandsbefestigung von Fassadenplatten (4) und dergleichen an Bauwerken (5), wobei der Spreizdübel (1) eine Zentralbohrung (6), einen in eine bauwerkseitige Aufnahmeöffnung einführbaren, vom Spreizelement (16) aufweitbaren Spreizbereich (2) und ein entgegen der Einführrichtung an den Spreizbereich (2) anschliessendes Halsteil (3) aufweist, und das Halsteil (3) zur Festlegung der Platten (4) spreizbereichseitig mit einem einrückbaren Auflager (9) und am freien Ende mit einem Widerlager (11) versehen ist, dadurch gekennzeichnet, dass der zwischen dem Auflager (9) und dem Widerlager (11) liegende Abschnitt (12) des Halsteiles (3) wenigstens entlang einem Teil seiner Länge einen axial verkürzbaren Bereich (14) aufweist, dass wenigstens im axial verkürzbaren Bereich (14) die Wandstärke gegenüber derjenigen des verbleibenden Halsteil-Bereiches geringer ist, und dass die Zentralbohrung (6) zum freien Ende des Halsteiles (3) hin, anschliessend an den axial verkürzbaren Bereich (14) einen Anschlag (15) für eine Schulter (17) des Spreizelementes (16) aufweist.

2. Spreizdübel nach Anspruch 1, dadurch gekennzeichnet, dass der axial verkürzbare Bereich (14) innerhalb des zwischen Auflager (9) und Widerlager (11) liegenden Abschnittes (12) des Halsteiles (3), benachbart zum Auflager (9) angeordnet ist.

**Claims**

1. Expanding dowel (1) comprising an expansion element (16) for the spaced fastening of facing plates (4) and the like to buildings (5), in which respect the expanding dowel (1) has a central bore (6), an expansion region (2) which can be introduced into a building-side reception aperture and which can be expanded by the expansion element (16), and a neck part (3) which, contrary to the insertion direction, adjoins the expansion region (2), and the neck part (3) is provided at the expansion region side with an engageable bearing surface (9) for the location of the facing plates (4) and at the free end with an abutment (11), characterised in that a portion (12) of the neck part (3) which lies between the bearing surface (9) and the abutment (11) has, at least along a part of its length, an axially shortenable region (14), and in that at least in the axially shortenable region (14) the wall thickness is less as compared with that of the remaining neck-part region, and in that the central bore (6) has, towards the free end of the neck part (3) and adjoining the axially shortenable region (14), a stop (15) for a shoulder (17) of the expansion element (16).

2. Expanding dowel according to claim 1, characterised in that the axially shortenable region (14) is arranged inside that portion (12) of the neck part (3) which lies between bearing surface (9) and abutment (11), and adjacent to the bearing surface (9).

**Revendications**

1. Cheville à expansion (1) avec un élément d'expansion ment (16) pour la fixation à distance de plaques de façades (4) et d'éléments analogues sur des constructions (5), la cheville à expansion (1) présentant un alésage central (6), une zone d'expansion (2) pouvant être élargie par l'élément d'expansion (16) et, faisant suite à la zone d'expansion (2) dans le sens inverse de la direction d'introduction, une section de col (3) laquelle est munie, pour la fixation des plaques (4), d'un appui (9) escamotable du côté zone d'expansion et d'une butée (11) à l'extrémité libre, <u>caractérisée en ce</u> que la section (12) de la section de col (3) située entre l'appui (9) et la butée (11) comprend, au moins le long d'une partie de sa longueur, une zone (14) pouvant être raccourcie dans le sens axial; que du moins dans la section axialement raccourcissable (14) l'épaisseur de paroi est inférieure à celle du reste de la section de col; et que l'alésage central (6) présente, en direction de l'extrémité libre de la section de col (3), à la suite de la section axialement raccourcissable (14), une butée (15) pour un épaulement (17) de l'élément d'expansion (16).

2. Cheville à expansion selon la revendication 1, caractérisée en ce que la section axialement raccourcissable (14) est disposée, à l'intérieur de la section (12) de la section de col (3) située entre l'appui (9) et la butée (11), au voisinage de l'appui (9).

Fig.1  Fig.1a  Fig.1b